# EUROPEAN PATENT APPLICATION

(11) **EP 4 625 951 A1**
(43) Date of publication of application: **01.10.2025**
(21) Application number: 23917186.1
(22) Date of filing: 16.11.2023
(51) Int. Cl.: H04M 1/02

(54) **MIDDLE FRAME ASSEMBLY AND ELECTRONIC DEVICE**

(30) Priority: 20.01.2023 CN 202310101329
(71) Applicant: Honor Device Co., Ltd., Shenzhen, Guangdong 518040 (CN)
(72) Inventor: ZHANG, Bing, Shenzhen, Guangdong 518040 (CN); ZHAO, Kuibing, Shenzhen, Guangdong 518040 (CN); WANG, Ya, Shenzhen, Guangdong 518040 (CN); YAO, Wenxing, Shenzhen, Guangdong 518040 (CN); LI, Jianping, Shenzhen, Guangdong 518040 (CN)
(74) Representative: MERH-IP Matias Erny Reichl Hoffmann Patentanwälte PartG mbB
(86) International application number: PCT/CN2023/132121
(87) International publication number: WO 2024/152718

(57) **Abstract**

Embodiments of this application provide a middle frame assembly and an electronic device. The middle frame assembly includes a middle frame body and a supporting piece, the middle frame body has a mounting notch, the supporting piece is disposed in the mounting notch, the supporting piece is connected to the middle frame body, and the supporting piece has a first jack. According to the middle frame assembly provided in this application, strength of the supporting piece can be improved, and a risk that the supporting piece fractures can be reduced.

## Description

This application claims priority to Chinese Patent Application No. 202310101329.6, filed with the China National Intellectual Property Administration on January 20, 2023 and entitled "MIDDLE FRAME ASSEMBLY AND ELECTRONIC DEVICE", which is incorporated herein by reference in its entirety.

### TECHNICAL FIELD

This application relates to the field of electronic apparatus technologies, and in particular, to a middle frame assembly and an electronic device.

### BACKGROUND

Flexible display technologies are becoming maturer, and flexible displays are also more widely used. Electronic devices may have flexible displays, so that the electronic devices are foldable, have larger screens, and provide better viewing experience.

For ease of carrying, foldable electronic devices are being designed to be thinner and lighter. However, thinning and lightening design results in a reduction in strength at a USB beam (which may also be referred to as a supporting piece) of a foldable electronic device. When the foldable electronic device is charged through plugging and unplugging, there is a high risk that the USB beam fractures.

### SUMMARY

Embodiments of this application provide a middle frame assembly and an electronic device, to improve strength of a supporting piece and reduce a risk that the supporting piece fractures.

According to a first aspect, an embodiment of this application provides a middle frame assembly. Being used in an electronic device, the middle frame assembly includes a middle frame body and a supporting piece, the middle frame body has a mounting notch, the supporting piece is disposed in the mounting notch, the supporting piece is connected to the middle frame body, and the supporting piece has a first jack that is configured for an insertion piece to pass through. The middle frame assembly provided in this application includes a middle frame body and a supporting piece. The middle frame body and the supporting piece are two parts that can be separated. Therefore, the middle frame body and the supporting piece can be made of different materials. The supporting piece can be made of a material whose compressive strength is greater than that of the middle frame body. In this way, a supporting piece of higher strength may be selected, to increase strength of the supporting piece, thereby reducing a risk that an electronic device fractures at the supporting piece.

In a possible implementation, according to the middle frame assembly provided in this embodiment of this application, the middle frame body has at least one first mounting portion, the supporting piece has at least one second mounting portion, and the first mounting portions are connected to the second mounting portions on a one-to-one basis. The first mounting portion and the second mounting portion provide connection positions for the middle frame body and the supporting piece. Therefore, the middle frame body and the supporting piece can be easily connected by connecting the first mounting portion and the second mounting portion.

In a possible implementation, according to the middle frame assembly provided in this embodiment of this application, the supporting piece has a first end and a second end, the first end and the second end are disposed opposite each other in a direction in which the supporting piece extends, and the direction in which the supporting piece extends is perpendicular to a direction in which the insertion piece is inserted in the first jack; and the second mounting portion is located at the first end, and an end face that is of the first mounting portion and that faces the supporting piece forms a first inner side wall of the mounting notch. In this way, it is avoided that the first mounting portion and the second mounting portion affect passing of a plug of the insertion piece through the first jack in the supporting piece.

In a possible implementation, according to the middle frame assembly provided in this embodiment of this application, the mounting notch has a second inner side wall, the first inner side wall is opposite the second inner side wall, and there is a gap between the second end and the second inner side wall. In this way, with the gap, a clearance is reserved for an antenna of the electronic device.

In a possible implementation, according to the middle frame assembly provided in this embodiment of this application, the first mounting portion and the second mounting portion are soldered or stuck together.

In a possible implementation, according to the middle frame assembly provided in this embodiment of this application, a first connecting piece is further included, the first mounting portion has a first connection position, the second mounting portion has a second connection position, and the first connection position and the second connection position are connected by the first connecting piece. In this way, the second mounting portion and the first mounting portion are securely connected.

In a possible implementation, according to the middle frame assembly provided in this embodiment of this application, the first connecting piece is a rivet, and the first connection position and the second connection position are first connecting holes; or
the first connecting piece is a screw, one of the first connection position and the second connection position is a second connecting hole, and the other is a threaded hole matching the screw.

In a possible implementation, according to the middle frame assembly provided in this embodiment of this application, at least one of the first mounting portion and the second mounting portion has a positioning piece, and the positioning piece is configured to limit mounting positions of the first mounting portion and the second mounting portion. In other words, relative mounting positions of the first mounting portion and the second mounting portion are limited by the positioning piece. In this way, the supporting piece can be quickly placed in a preset mounting position in the middle frame body, saving time used for adjusting mounting positions of the supporting piece and the middle frame body when the supporting piece and the middle frame body are connected, and improving efficiency of mounting the supporting piece and the middle frame body.

In a possible implementation, according to the middle frame assembly provided in this embodiment of this application, the positioning piece is a positioning step, the positioning step is located on one of the first mounting portion and the second mounting portion, and the positioning step has a step bottom face and a step side face; and a surface of the other of the first mounting portion and the second mounting portion presses against the step bottom face, and an end face that is of the other of the first mounting portion and the second mounting portion and that is opposite the step side face presses against the step side face. The positioning step provided on one of the first mounting portion and the second mounting portion limits mounting positions of the first mounting portion and the second mounting portion. In this way, it is convenient to operate. The positioning step can also support the other of the first mounting portion and the second mounting portion.

In a possible implementation, according to the middle frame assembly provided in this embodiment of this application, the step bottom face is parallel to the direction in which the insertion piece is inserted in the first jack.

In a possible implementation, according to the middle frame assembly provided in this embodiment of this application, the supporting piece has a first material-pressing portion and a second material-pressing portion, and the first material-pressing portion and the second material-pressing portion are located on a side face that is of the supporting piece and that faces the interior of the mounting notch; and the first material-pressing portion and the second material-pressing portion are located on two sides of the first jack, respectively.

In a possible implementation, according to the middle frame assembly provided in this embodiment of this application, the first material-pressing portion is located on the second mounting portion, and the first material-pressing portion presses against a side face of one of the first mounting portion and the second mounting portion. In this way, the supporting piece can be placed in the preset mounting position in the middle frame body. Accordingly, the first connection position and the second connection position communicate with each other. Therefore, it is convenient to connect the middle frame body and the supporting piece by the first connecting piece.

In a possible implementation, according to the middle frame assembly provided in this embodiment of this application, the middle frame body includes a middle plate and a border frame, the middle plate is connected to the border frame, and the mounting notch is provided in the border frame.

In a possible implementation, according to the middle frame assembly provided in this embodiment of this application, the supporting piece is a metal injection molding part.

In a possible implementation, according to the middle frame assembly provided in this embodiment of this application, a second connecting piece is further included, the supporting piece and the middle frame body are connected by the second connecting piece, and the second connecting piece coats the supporting piece and part of the middle frame body.

In a possible implementation, according to the middle frame assembly provided in this embodiment of this application, the second connecting piece is a plastic injection molding part. The second connecting piece formed through an injection molding process is of uniform thickness, implementing seamless connection between the supporting piece and the middle frame body, and also helping reduce a weight of the entire electronic device.

In a possible implementation, according to the middle frame assembly provided in this embodiment of this application, part of the second connecting piece coats an inner side wall of the first jack to form a second jack. In this way, the second connecting piece protects the supporting piece, preventing the plug of the insertion piece from being in contact with the supporting piece.

According to a second aspect, an embodiment of this application further provides an electronic device. The electronic device includes a display and any middle frame assembly provided in the first aspect. The display is located on a side of the middle frame assembly.

### BRIEF DESCRIPTION OF DRAWINGS

FIG. 1 is a diagram of a structure of an electronic device in a folded state according to an embodiment of this application;
FIG. 2 is a diagram of a structure of an electronic device in an intermediate state according to an embodiment of this application;
FIG. 3 is a diagram of a structure of an electronic device in an unfolded state according to an embodiment of this application;
FIG. 4 is an exploded view of FIG. 3;
FIG. 5 is a view of a section A-A in FIG. 4;
FIG. 6 is a diagram 1 of an internal structure of a part B in FIG. 3;
FIG. 7 is a diagram of a structure of a middle frame body in FIG. 6;
FIG. 8 is a diagram of a structure of a supporting piece in FIG. 6;
FIG. 9 is a diagram 2 of an internal structure of a part B in FIG. 3;
FIG. 10 is a diagram of a structure of a supporting piece in FIG. 9;
FIG. 11 is a diagram of a structure of a middle frame body in FIG. 3;
FIG. 12 is a diagram 3 of an internal structure of a part B in FIG. 3;
FIG. 13 is a diagram of structures of a middle plate and a border frame in FIG. 12;
FIG. 14 is a side view of FIG. 12;
FIG. 15 is a view of a section C-C in FIG. 14;
FIG. 16 is a flowchart of a middle frame assembly production method according to an embodiment of this application;
FIG. 17 is a diagram of a structure of a middle frame body produced in FIG. 16;
FIG. 18 is a diagram of a structure of a supporting piece produced in FIG. 16;
FIG. 19 is a diagram 1 of a structure of connection between FIG. 17 and FIG. 18; and
FIG. 20 is a diagram 2 of a structure of connection between FIG. 17 and FIG. 18.

Description of reference numerals in the accompanying drawings:
1-foldable mobile phone;
100-first housing;
200-second housing; 20-section;
210-middle frame body; 211-mounting notch; 2111-second inner side wall; 212-first mounting portion; 212a-first side face; 212b-second surface; 2121-first connection position; 2122-positioning step; 2122a-step bottom face; 2122b-step side face; 2123-avoidance groove; 213-middle plate; 214-border frame; 215-first material-connecting piece;
220-supporting piece; 221-second mounting portion; 221a-first surface; 221b-mounting end face; 221c-second side face; 221d-third surface; 2211-second connection position; 2212-stopper portion; 222-first jack; 223-second material-connecting piece; 224-first end; 225-second end; 226-first material-pressing portion; 227-second material-pressing portion;
300-rotating assembly;
400-display;
500-circuit board assembly; 510-USB port;
600-insertion jack;
700-first connecting piece;
800-second connecting piece; 810-second jack.

### DESCRIPTION OF EMBODIMENTS

Terms used in implementations in this application are merely intended to explain specific embodiments of this application rather than being intended to limit this application.

Universal serial bus (Universal Serial Bus, USB) is an external bus standard, used to regulate connection and communication between electronic devices and external devices. USB ports support plug-and-play and hot-swappable functions of devices.

An electronic device provided in embodiments of this application may include, but is not limited to, a stationary or mobile terminal such as a mobile phone, a tablet computer, a notebook computer, an ultra-mobile personal computer (ultra-mobile personal computer, UMPC), a handheld computer, a touch screen TV, a walkie-talkie, a netbook, a POS terminal, a personal digital assistant (personal digital assistant, PDA), a wearable device, or a virtual reality device. The electronic device may be a foldable electronic device. For ease of description, an example in which the electronic device is a foldable mobile phone 1 is used for description in embodiments of this application.

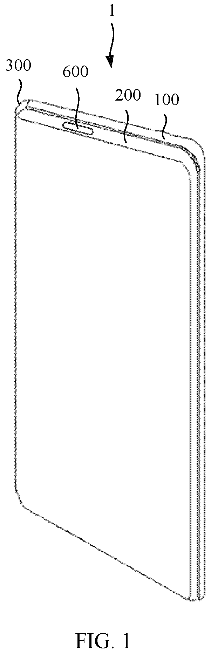

As shown in FIG. 1 to FIG. 3, in embodiments of this application, the foldable mobile phone 1 may be a foldable mobile phone 1 with an outward-folding display, or a foldable mobile phone 1 with an inward-folding display (as shown in FIG. 1), or a foldable mobile phone 1 with an inward-folding display and an additional outer display. The following uses the foldable mobile phone 1 with an inward-folding display as an example for description.

In this application, a foldable mobile phone 1 may include a first housing 100, a second housing 200, a rotating assembly 300, and a display 400. The rotating assembly 300 may be a rotating shaft assembly, or another assembly capable of implementing rotation. The first housing 100 and the second housing 200 are respectively connected to two opposite sides of the rotating assembly 300. With the rotating assembly 300 rotating, the first housing 100 and the second housing 200 are driven to rotate relatively. The display 400 may be a flexible display. The display 400 may be located on a side of the first housing 100 and the second housing 200. For example, the display 400 is disposed on the first housing 100 and the second housing 200. When the first housing 100 and the second housing 200 rotate relatively, the display 400 also rotates relatively.

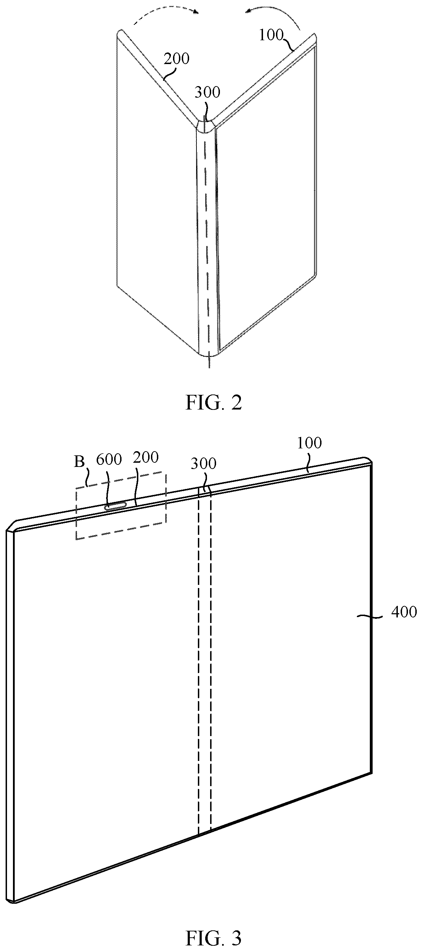

When the first housing 100 and the second housing 200 move towards each other in directions indicated by arrows in FIG. 2 (a dashed-line arrow and a solid-line arrow), or when a side corresponding to a dashed-line arrow moves towards a side corresponding to a solid-line arrow, the foldable mobile phone 1 may be made to be in a folded state shown in FIG. 1. As shown in FIG. 1, when the foldable mobile phone 1 is in a folded state, the first housing 100 and the second housing 200 are in a stacked state, and the rotating assembly 300 and the display 400 are both in a folded state.

When the first housing 100 and the second housing 200 move towards each other in directions opposite to directions indicated by arrows in FIG. 2 (a dashed-line arrow and a solid-line arrow), or when a side corresponding to a dashed-line arrow moves away from a side corresponding to a solid-line arrow in an opposite direction, the foldable mobile phone 1 may be made to be in an unfolded state shown in FIG. 3. As shown in FIG. 3, when the foldable mobile phone 1 is in an unfolded state, the first housing 100 and the second housing 200 cannot continue to rotate. In this case, the first housing 100 and the second housing 200 may be on a same plane, and the rotating assembly 300 and the display 400 are both in an unfolded state.

It should be noted that the foldable mobile phone 1 may include two housings. In other words, there may be one first housing 100 and one second housing 200, so that the foldable mobile phone 1 can be folded into two layers shown in FIG. 1.

Alternatively, the foldable mobile phone 1 may include more than two housings. In other words, there is at least one first housing 100 and at least two second housings 200, or there is at least one second housing 200 and at least two first housings 100. The first housing(s) 100 and the second housing(s) 200 are disposed alternately. For each pair of the first housing 100 and the second housing 200 that are adjacent, the housings are connected by a rotating assembly 300, so that the foldable mobile phone 1 can be folded into three or more layers. In this way, a display of a foldable mobile phone 1 can be folded inward, and an outer display can also be folded.

It should be noted that the structures illustrated in the embodiments of this application do not constitute specific limitations on the electronic device. In some other embodiments of this application, the electronic device may include more or fewer components than those shown in the figure, or combine some components, or split some components, or have different component arrangements. For example, the electronic device may further include devices such as a battery, cameras (for example, a front-facing camera and a rear-facing camera), and a flash.

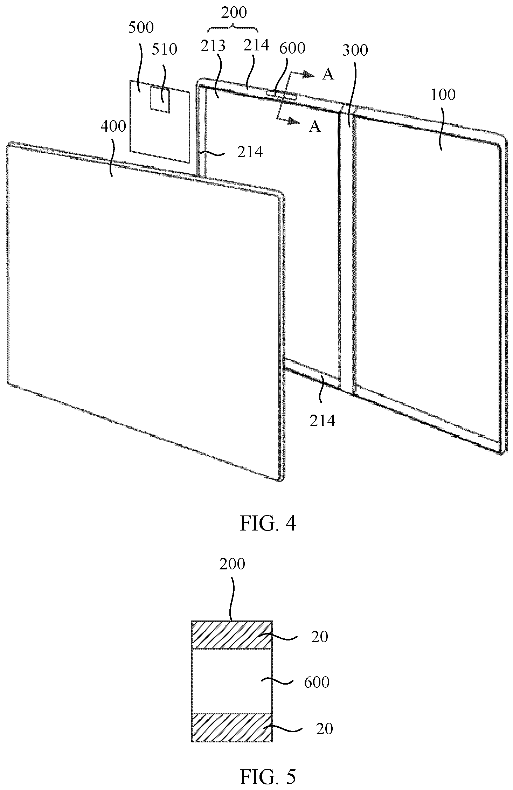

As shown in FIG. 4 and FIG. 5, the foldable mobile phone 1 may further include a circuit board assembly 500. The circuit board assembly 500 has a USB port 510. One of the first housing 100 and the second housing 200 is provided with an insertion jack 600 that corresponds to the USB port 510. A plug of a USB data cable is electrically connected to the USB port 510 through the insertion jack 600, to supply power to the foldable mobile phone 1, or to transfer data between the foldable mobile phone 1 and another device.

It can be understood that the insertion jack 600 may be provided in one of the first housing 100 and the second housing 200. For ease of description, the following uses an example for description in which the insertion jack 600 is located in the second housing 200.

In a related technology, the insertion jack 600 and the second housing 200 may be integrally molded. For example, the insertion jack 600 and the second housing 200 may be integrally molded by employing a die casting process. The insertion jack 600 and the second housing 200 may be made of die cast aluminum or die cast magnesium. To make the foldable mobile phone 1 thinner and lighter, thicknesses of the first housing 100 and the second housing 200 need to be reduced. As a result, an area of a section 20 of the second housing 200 at the insertion jack 600 is reduced. Specifically, the area of the section 20 is required to be 0.80 mm² to 0.90 mm² during design, but due to thinning design, the area of the section 20 is 0.3 mm² to 0.5 mm². Because the area of the section 20 is reduced, strength of the second housing 200 at the insertion jack 600 decreases. When a USB data cable is plugged into or unplugged from the foldable mobile phone 1, a plug of the USB data cable hits a part that is of the second housing 200 and that is at the insertion jack 600, resulting in a high risk that a USB beam (for example, the part that is of the second housing 200 and that is at the insertion jack 600) fractures.

To increase the strength of the second housing 200 at the insertion jack 600, overall strength of the second housing 200 may be increased, for example, integrally forming the second housing 200 with the insertion jack 600 from a high-strength material. However, this method results in an increase in costs of the foldable mobile phone 1.

Based on this, this application provides a middle frame assembly and an electronic device. The middle frame assembly includes a middle frame body and a supporting piece. The middle frame body and the supporting piece are two parts that can be separated. Therefore, the middle frame body and the supporting piece can be made of different materials. The supporting piece can be made of a material whose compressive strength is greater than that of the middle frame body. In this way, a supporting piece of higher strength may be selected, to increase strength of the supporting piece, thereby reducing a risk that an electronic device fractures at the supporting piece.

In embodiments of this application and the accompanying drawings, an example is used for description in which the middle frame assembly is the second housing 200.

The following describes the middle frame assembly in this application with reference to the accompanying drawings and embodiments.

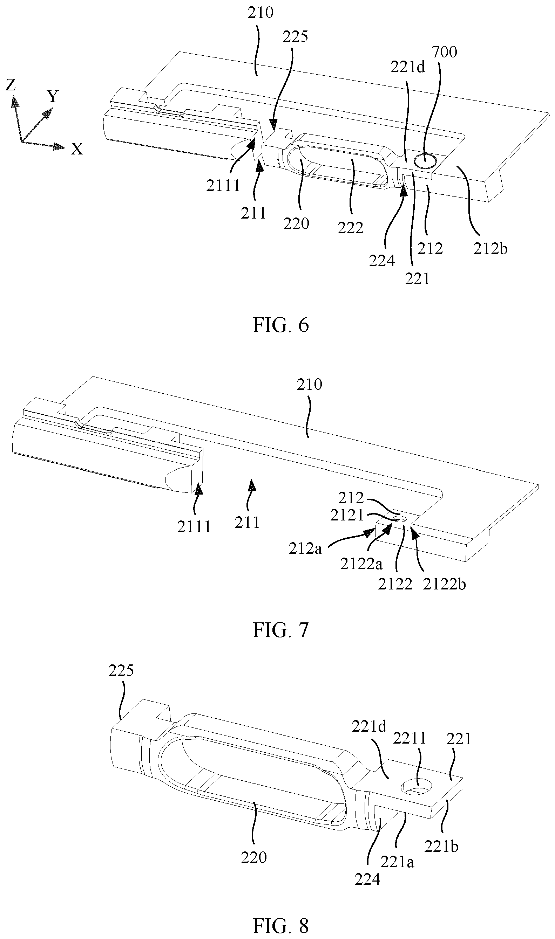

FIG. 6 shows a first internal structure of a part B in FIG. 3. As shown in FIG. 3, FIG. 4, and FIG. 6, a middle frame assembly provided in an embodiment of this application is used in an electronic device. The middle frame assembly includes a middle frame body 210 and a supporting piece 220. The middle frame body 210 has a mounting notch 211. The supporting piece 220 is disposed in the mounting notch 211. The supporting piece 220 is connected to the middle frame body 210. The supporting piece 220 has a first jack 222 that is configured for an insertion piece to pass through.

It should be noted that the insertion piece may be a USB data cable and the USB data cable includes a plug, and correspondingly, the first jack 222 in this application is configured for the plug of the USB data cable to pass through; or the insertion piece may be a wired earphone cable, and correspondingly, the first jack 222 in this application is configured for a plug of the earphone cable to pass through. The following uses an example for description in which the first jack 222 is configured for a plug of a USB data cable to pass through.

In this application, the middle frame body 210 may be provided with mounting positions in different shapes. Components such as a battery and a circuit board assembly 500 may be correspondingly mounted in different mounting positions on the middle frame body 210.

During specific implementation, the middle frame body 210 may be made of aluminum. Aluminum is strong, flexible, and lightweight in texture, and has good ductility and malleability. When aluminum is used to make the middle frame body 210, a weight of the electronic device can be reduced. The middle frame body 210 may be molded through die casting. Die casting is efficient. In addition, the middle frame body 210 can be directly molded, or the middle frame body 210 is molded after subsequent trimming is performed, for example, deburring. In this way, efficiency of producing the middle frame body 210 can be improved.

It can be understood that the middle frame body 210 may be made of an aluminum alloy. For example, some alloying elements are added to aluminum to alter a microstructure and properties of aluminum, to adapt to processing or casting. The alloying element may be copper, magnesium, zinc, silicon, or the like. The middle frame body 210 may be alternatively made of a steel-aluminum composite or the like. This is not limited herein in this embodiment of this application.

In this application, the mounting notch 211 is provided in the middle frame body 210, and the supporting piece 220 is inserted into the mounting notch 211. In this way, compared with a manner in which the supporting piece 220 and the middle frame body 210 are disposed sequentially in a direction Y in FIG. 6, this manner avoids the supporting piece 220 affecting a length of the middle frame body 210 in the direction Y in FIG. 6. In addition, compared with a manner in which the supporting piece 220 and the middle frame body 210 are disposed sequentially in a direction Z in FIG. 6, for example, the supporting piece 220 is stacked on the middle frame body 210 in the direction Z in FIG. 6, this manner avoids the supporting piece 220 affecting a thickness of the middle frame body 210 in the direction Z in FIG. 6. In this way, an increase in overall dimensions of the electronic device (for example, a length and a thickness) is avoided.

When the electronic device is charged, a plug of a USB data cable (which may also be referred to as a charging cable) enters and exits the supporting piece 220 through the first jack 222, to be connected to or disconnected from a USB port 510 in the circuit board assembly 500 disposed in the middle frame body 210. The supporting piece 220 is subjected to a force exerted on the supporting piece 220 by the plug of the USB data cable. If the supporting piece 220 is made of a low-strength material such as aluminum, or if an overall thickness of the foldable electronic device is reduced (for example, with a size of the first jack 222 not changed, the thickness in the direction Z in FIG. 6 is reduced), there is a high risk that the supporting piece 220 fractures.

In view of this, in this application, a middle frame assembly is divided into two parts: a middle frame body 210 and a supporting piece 220. In this way, the middle frame body 210 and the supporting piece 220 can be made of different materials. For example, the middle frame body 210 may be made of a material in the related technology (for example, aluminum), while the supporting piece 220 may be made of a material whose compressive strength is greater than that of the middle frame body 210. As such, a supporting piece 220 of higher strength may be selected, to increase strength of the supporting piece 220, thereby reducing a risk that an electronic device fractures at the supporting piece 220.

In addition, in this application, the supporting piece 220 is a metal injection molding part. In other words, the supporting piece 220 is molded through metal injection. Metal injection molding (Metal Injection Molding, MIM) is a molding method in which a plasticizing mixture of metal powder and a binder of the powder is injected into a mold. In the method, selected powder is first mixed with a binder, the mixture is then granulated, and granules are then injected to form a desired shape.

Die casting may include hot-chamber die casting and dry pressing. For die casting, there are many burrs, processing precision is poor, and finishing needs to be performed subsequently. Compared with a part produced through die casting, a supporting piece 220 produced through metal injection molding does not require a finishing process, and features low shrinkage, high compressive strength, and good wear resistance. In this way, a supporting piece 220 with high compressive strength may be formed through metal injection molding. In other words, strength of a supporting piece 220 is increased by changing a manner of forming the supporting piece 220, reducing a risk that an electronic device fractures at the supporting piece 220.

In the middle frame assembly provided in this embodiment of this application, the supporting piece 220 is a metal injection molding part. For example, the supporting piece 220 may be a stainless steel part formed through injection molding. In other words, a supporting piece 220 molded by injecting a plasticizing mixture of stainless steel injection powder and a binder of the powder into a mold is used. Stainless steel has a beautiful appearance, is corrosion-resistant, and is not easily damaged.

The stainless steel injection powder may be martensitic precipitation-hardening stainless steel (for example, stainless steel 17-4 PH). The stainless steel 17-4 PH offers high strength, high hardness, and also superior corrosion resistance.

FIG. 7 and FIG. 8 show structures of a middle frame body and a supporting piece, respectively. As shown in FIG. 6 to FIG. 8, in some embodiments, the middle frame body 210 has at least one first mounting portion 212, the supporting piece 220 has at least one second mounting portion 221, and the first mounting portions 212 are connected to the second mounting portions 221 on a one-to-one basis.

In this application, the first mounting portion 212 and the second mounting portion 221 provide connection positions for the middle frame body 210 and the supporting piece 220. Therefore, the middle frame body 210 and the supporting piece 220 can be easily connected by connecting the first mounting portion 212 and the second mounting portion 221.

Specifically, the supporting piece 220 has a first end 224 and a second end 225. The first end 224 and the second end 225 are disposed opposite each other in a direction in which the supporting piece 220 extends (for example, a direction X in FIG. 6). The direction in which the supporting piece 220 extends (for example, the direction X in FIG. 6) is perpendicular to a direction in which the insertion piece is inserted in the first jack 222 (for example, the direction Y in FIG. 6). The second mounting portion 221 is located at the first end 224. An end face that is of the first mounting portion 212 and that faces the supporting piece 220 forms a first inner side wall of the mounting notch 211 (for example, a first side face 212a in FIG. 7).

In other words, there is a distance between positions of the first mounting portion 212 and the second mounting portion 221 and the first jack 222. In this way, it is avoided that the first mounting portion 212 and the second mounting portion 221 affect passing of a plug of a USB data cable through the first jack 222 in the supporting piece 220.

During specific implementation, the second mounting portion 221 may be a supporting plate disposed on the first end 224 of the supporting piece 220, and the first mounting portion 212 may be a supporting stand close to the mounting notch 211.

The mounting notch 211 has a second inner side wall 2111. The first inner side wall (for example, the first side face 212a in FIG. 7) is opposite the second inner side wall 2111. In some embodiments, the second end 225 of the supporting piece 220 is in contact with the second inner side wall 2111 of the mounting notch 211. In this way, the supporting piece 220 is supported by the second inner side wall 2111.

In some other embodiments, there is a gap between the second end 225 of the supporting piece 220 and the second inner side wall 2111 of the mounting notch 211. In this way, with the gap, a clearance is reserved for an antenna of the electronic device. During specific implementation, a size of the gap may be designed based on requirements of the electronic device. This is not limited herein in this application.

The following describes possible manners in which the first mounting portion 212 and the second mounting portion 221 are connected.

In a first possible implementation, the first mounting portion 212 and the second mounting portion 221 may be directly soldered together. In this way, the middle frame body 210 and the supporting piece 220 are securely connected.

In a second possible implementation, the first mounting portion 212 and the second mounting portion 221 are stuck together. In this way, it is convenient to operate.

In a third possible implementation, the first mounting portion 212 and the second mounting portion 221 are connected by a first connecting piece 700. The first mounting portion 212 has a first connection position 2121, the second mounting portion 221 has a second connection position 2211, and the first connection position 2121 and the second connection position 2211 are connected by the first connecting piece 700.

The first connecting piece 700 may be a rivet. The first connection position 2121 and the second connection position 2211 are first connecting holes. The rivet is inserted into the first connection position 2121 and the second connection position 2211. In this way, the first mounting portion 212 and the second mounting portion 221 are connected.

The first connecting piece 700 may alternatively be a screw. One of the first connection position 2121 and the second connection position 2211 is a second connecting hole, and the other of the first connection position 2121 and the second connection position 2211 is a threaded hole matching the screw. The screw first passes through the second connecting hole and then is screwed into the threaded hole. In this way, the first mounting portion 212 and the second mounting portion 221 are connected.

In the foregoing embodiments, to solder the first mounting portion 212 and the second mounting portion 221 together, a soldering rod is required; or to stick the first mounting portion 212 and the second mounting portion 221 together, glue is required; or to connect the first mounting portion 212 and the second mounting portion 221 together, a rivet or screw is required. In other words, to connect the first mounting portion 212 and the second mounting portion 221, a part other than the first mounting portion 212 and the second mounting portion 221 is required.

In an embodiment, the first mounting portion 212 and the second mounting portion 221 may be directly connected. Specifically, the first mounting portion 212 has a first connection position 2121, and the second mounting portion 221 has a second connection position 2211. The first mounting portion 212 and the second mounting portion 221 may be alternatively connected directly by the first connection position 2121 and the second connection position 2211.

During specific implementation, one of the first connection position 2121 and the second connection position 2211 may be a groove, and the other is a fastener matching the groove. In this way, the first mounting portion 212 and the second mounting portion 221 are directly connected through snap-fitting.

Still as shown in FIG. 6 to FIG. 8, in the middle frame assembly provided in this embodiment of this application, at least one of the first mounting portion 212 and the second mounting portion 221 has a positioning piece. The positioning piece is configured to limit relative mounting positions of the first mounting portion 212 and the second mounting portion 221. In other words, relative mounting positions of the first mounting portion 212 and the second mounting portion 221 are limited by the positioning piece. In this way, the supporting piece 220 can be quickly placed in a preset mounting position in the middle frame body 210, saving time used for adjusting mounting positions of the supporting piece 220 and the middle frame body 210 when the supporting piece 220 and the middle frame body 210 are connected, and improving efficiency of mounting the supporting piece 220 and the middle frame body 210.

In this application, only the first mounting portion 212 may be provided with a positioning piece, or only the second mounting portion 221 may be provided with a positioning piece, or both the first mounting portion 212 and the second mounting portion 221 are provided with a positioning piece. When both the first mounting portion 212 and the second mounting portion 221 are provided with a positioning piece, the positioning pieces on the first mounting portion 212 and the second mounting portion 221 may be of a same structure or different structures.

The following describes a structure and possible providing positions of the positioning piece.

In some embodiments, the positioning piece is a positioning step 2122. There is at least one positioning step 2122. The positioning step 2122 is located on one of the first mounting portion 212 and the second mounting portion 221. The positioning step 2122 has a step bottom face 2122a and a step side face 2122b. A surface of the other of the first mounting portion 212 and the second mounting portion 221 presses against the step bottom face 2122a. An end face that is of the other of the first mounting portion 212 and the second mounting portion 221 and that is opposite the step side face 2122b presses against the step side face 2122b. The step bottom face 2122a may be perpendicular to the step side face 2122b. The step bottom face 2122a is parallel to the direction in which the insertion piece is inserted in the first jack 222.

In FIG. 6 to FIG. 8 in this application, an example is used for description in which there is one positioning step 2122, the positioning step 2122 is located on the first mounting portion 212, and the second mounting portion 221 is a supporting plate.

When the supporting piece 220 is mounted on the middle frame body 210, the second mounting portion 221 of the supporting piece 220 is placed on the positioning step 2122. A surface of the second mounting portion 221 (for example, a first surface 221a) presses against the step bottom face 2122a, and the supporting piece 220 is pushed until an end face that is of the second mounting portion 221 and that is opposite the step side face 2122b (for example, a mounting end face 221b) presses against the step side face 2122b, that is, the supporting piece 220 cannot be pushed further. In this case, the supporting piece 220 is placed in the preset mounting position in the middle frame body 210.

In some embodiments, the second mounting portion 221 of the supporting piece 220 is placed on the positioning step 2122, and a third surface 221d of the supporting piece 220 is flush with a second surface 212b of the middle frame body 210.

It can be understood that the second mounting portion 221 may also be provided with the positioning step 2122.

In this embodiment, the positioning step 2122 provided on one of the first mounting portion 212 and the second mounting portion 221 limits mounting positions of the first mounting portion 212 and the second mounting portion 221. In this way, it is convenient to operate. The positioning step 2122 can also support the other of the first mounting portion 212 and the second mounting portion 221.

In the foregoing embodiment, a case is shown in which at least one of the first mounting portion 212 and the second mounting portion 221 is provided with the positioning step 2122, and the positioning steps 2122 are of a same structure.

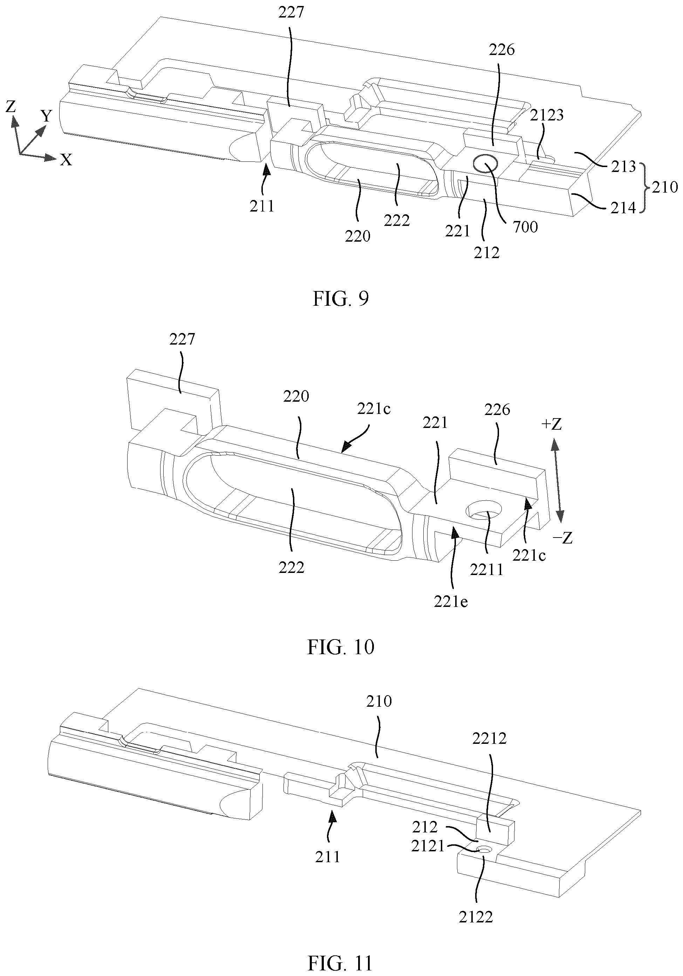

FIG. 9 shows a second internal structure of a part B in FIG. 3. FIG. 10 shows another supporting piece. As shown in FIG. 3, FIG. 9, and FIG. 10, during specific implementation, the supporting piece 220 has a first material-pressing portion 226 and a second material-pressing portion 227. The first material-pressing portion 226 and the second material-pressing portion 227 are located on a side face that is of the supporting piece 220 and that faces the interior of the mounting notch 211 (for example, a second side face 221c).

The first material-pressing portion 226 and the second material-pressing portion 227 are located on two sides of the first jack 222, respectively.

In this application, the first material-pressing portion 226 is located on the second mounting portion 221, and the first material-pressing portion 226 presses against a side face of one of the first mounting portion 212 and the second mounting portion 221.

The first material-pressing portion 226 is located on the side face of the second mounting portion 221 (for example, the second side face 221c). The first material-pressing portion 226 may extend towards upper and lower sides of the second mounting portion 221 (for example, directions +Z and -Z in FIG. 10). The second mounting portion 221 fits with and presses against the positioning step 2122. The first material-pressing portion 226 presses against the side face of the first mounting portion 212 (for example, the first side face 212a in FIG. 7). In this case, the supporting piece 220 is placed in the preset mounting position in the middle frame body 210. Accordingly, the first connection position 2121 and the second connection position 2211 are aligned. Therefore, it is convenient to connect the middle frame body 210 and the supporting piece 220 by inserting the first connecting piece 700 into the first connection position 2121 and the second connection position 2211.

It should be noted that in this embodiment, the middle frame body 210 may be provided with an avoidance groove 2123. When the first material-pressing portion 226 presses against the side face of the first mounting portion 212 (for example, the first side face 212a in FIG. 7), the first material-pressing portion 226 is partially inserted into the avoidance groove 2123. In this way, the avoidance groove 2123 provides mounting space for part of the first material-pressing portion 226, and also helps the second mounting portion 221 fit with and press against the positioning step 2122.

In some embodiments, there are two positioning pieces, the two positioning pieces are located on one of the first mounting portion 212 and the second mounting portion 221, and no positioning piece is disposed on the other. FIG. 11 shows a structure of another middle frame body. As shown in FIG. 8 and FIG. 11, in some embodiments, there are two positioning pieces. The two positioning pieces are a stopper portion 2212 and the positioning step 2122, respectively. The stopper portion 2212 and the positioning step 2122 are both disposed on the first mounting portion 212 of the middle frame body 210.

It can be understood that the stopper portion 2212 and the positioning step 2122 may be alternatively both disposed on the second mounting portion 221 of the supporting piece 220.

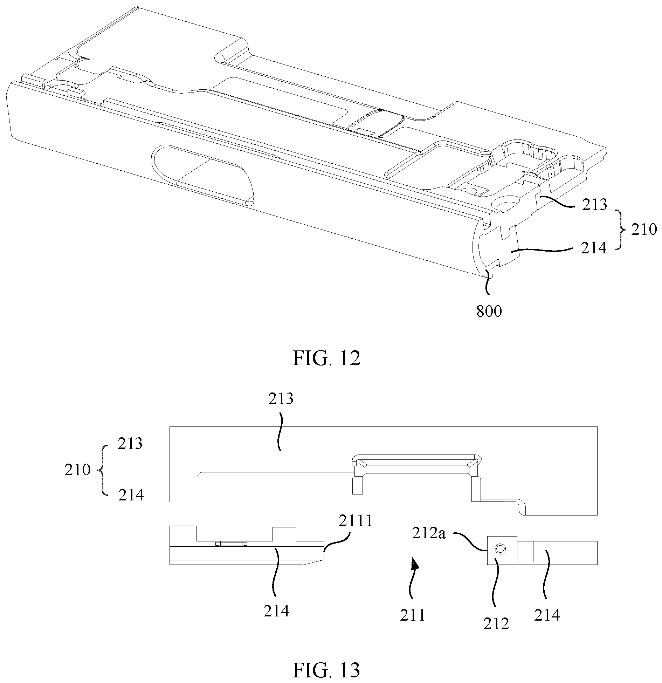

FIG. 12 shows a third internal structure of a part B in FIG. 3. As shown in FIG. 3, FIG. 4, FIG. 12, and FIG. 13, in the middle frame assembly provided in this embodiment of this application, the middle frame body 210 includes a middle plate 213 and a border frame 214, the middle plate 213 is connected to the border frame 214, and the mounting notch 211 is provided in the border frame 214.

The border frame 214 is disposed around an edge of the middle plate 213. Components such as the circuit board assembly 500 and the battery are disposed on the middle plate 213.

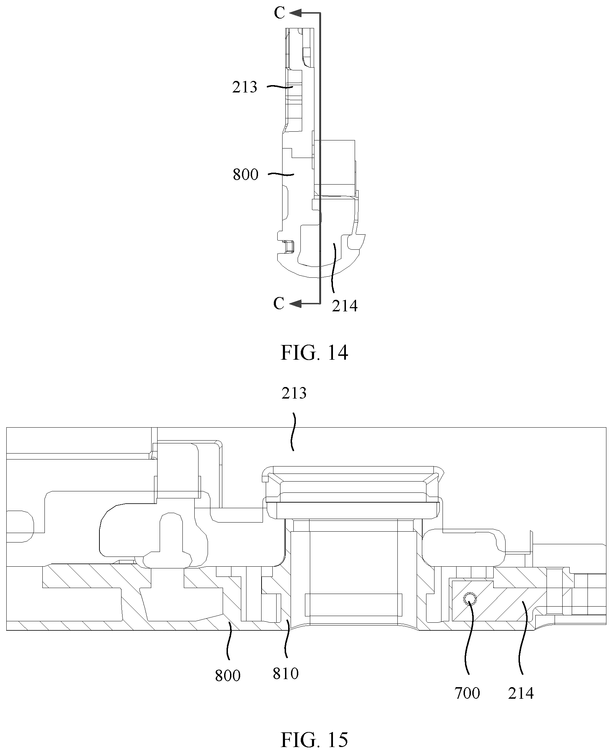

As shown in FIG. 12 to FIG. 15, for a purpose of helping securely connect the supporting piece 220 and the middle frame body 210, in some embodiments, the middle frame assembly further includes a second connecting piece 800. The supporting piece 220 and the middle frame body 210 are connected by the second connecting piece 800. The second connecting piece 800 coats the supporting piece and part of the middle frame body 210.

Specifically, the second connecting piece 800 coats the supporting piece, the border frame 214, and part of the middle plate 213.

During specific implementation, the second connecting piece 800 is a plastic injection molding part. In other words, the supporting piece 220, the border frame 214, and part of the middle plate 213 may be coated with plastic through an injection molding process, securely connecting the supporting piece 220 and the middle frame body 210. The second connecting piece 800 formed through the injection molding process is of uniform thickness, implementing seamless connection between the supporting piece 220 and the middle frame body 210, and also helping reduce the weight of the entire electronic device.

When the supporting piece 220, the border frame 214, and part of the middle plate 213 are coated with plastic through the injection molding process, the supporting piece 220, the border frame 214, and the middle plate 213 are located in an injection mold, and the first material-pressing portion 226 and the second material-pressing portion 227 of the supporting piece 220 in FIG. 9 are fastened, for example, the first material-pressing portion 226 and the second material-pressing portion 227 are pressed, to prevent the supporting piece 220 from displacing.

For a purpose of helping a plug of a data cable to enter and exit the middle frame assembly and be connected to the USB port 510 in the middle frame assembly, in some embodiments, the supporting piece 220 has the first jack 222, and the second connecting piece 800 coats an inner side wall of the first jack 222 to form a second jack 810. In other words, the second connecting piece 800 protects the supporting piece 220, preventing a plug of a data cable from being in contact with the supporting piece 220. A plug of a USB data cable enters the middle frame assembly through the second jack 810 and is connected to the USB port 510. The second jack 810 forms the insertion jack 600 in FIG. 1.

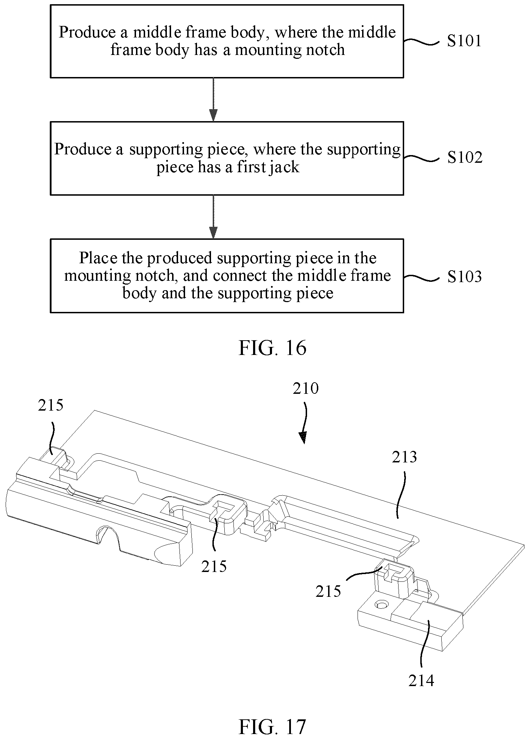

FIG. 16 shows a flowchart of a middle frame assembly production method. As shown in FIG. 4 to FIG. 16, the middle frame assembly production method in this embodiment of this application is used for producing the middle frame assembly provided in any one of the foregoing embodiments. The structure of the middle frame assembly is described in detail in the foregoing embodiments, and details are not described herein again.

The middle frame assembly production method includes the following steps.

S101: Produce a middle frame body, where the middle frame body has a mounting notch.

In this application, a middle frame body 210 may be produced by employing die casting which is efficient in molding. The middle frame body 210 may be made of aluminum or an aluminum alloy. When the middle frame body 210 is molded, a mounting notch 211 is reserved in the middle frame body 210, with the mounting notch 211 configured to accommodate a supporting piece 220.

S102: Produce a supporting piece, where the supporting piece has a first jack.

In this application, a supporting piece 220 may be formed through metal inj ection molding. The following describes a manner of forming a supporting piece 220.

For example, powder of stainless steel 17-4 PH may be mixed with a polymer binder (for example, a polymer wax-based binder), to obtain a mixture; the mixture is heated to obtain a fluid feedstock; the feedstock is stuffed in an injection machine, to obtain a green part through injection molding performed by the injection machine; the green part is debound, to form a debound part; the debound part is sintered, to enhance a density of the debound part and form a supporting piece 220; and the formed supporting piece 220 may be post-treated, such as deburring and polishing.

It can be understood that metal powder mixed with a polymer binder may also include alloy powder and powder of another type of stainless steel. This is not limited herein in this embodiment of this application.

S103: Place the produced supporting piece in the mounting notch, and connect the middle frame body and the supporting piece.

In this application, the middle frame body 210 and the supporting piece 220 may be connected through one of snap-fitting, sticking, soldering, riveting, or screwing. In this way, the middle frame body 210 and the supporting piece 220 are securely connected. Refer to the descriptions of the manners in which the middle frame body 210 and the supporting piece 220 are connected in the foregoing embodiment of the middle frame assembly. Details are not described herein again.

It should be noted that step S101 and step S102 in this embodiment are in no particular order. Step S101 and step S102 may be performed simultaneously; or step S101 may be performed first and then step S102 is performed; or step S102 may be performed first and then step S101 is performed.

According to the middle frame assembly production method provided in this embodiment of this application, a middle frame body 210 with a mounting notch 211 is produced, a supporting piece 220 is inserted into the mounting notch 211, and the middle frame body 210 and the supporting piece 220 are connected. Because the middle frame body 210 and the supporting piece 220 that form a middle frame assembly are disposed separately, the supporting piece 220 can be made of a material whose compressive strength is greater than that of the middle frame body 210. In this way, a supporting piece 220 of higher strength may be selected, reducing a risk that an electronic device fractures at the supporting piece 220.

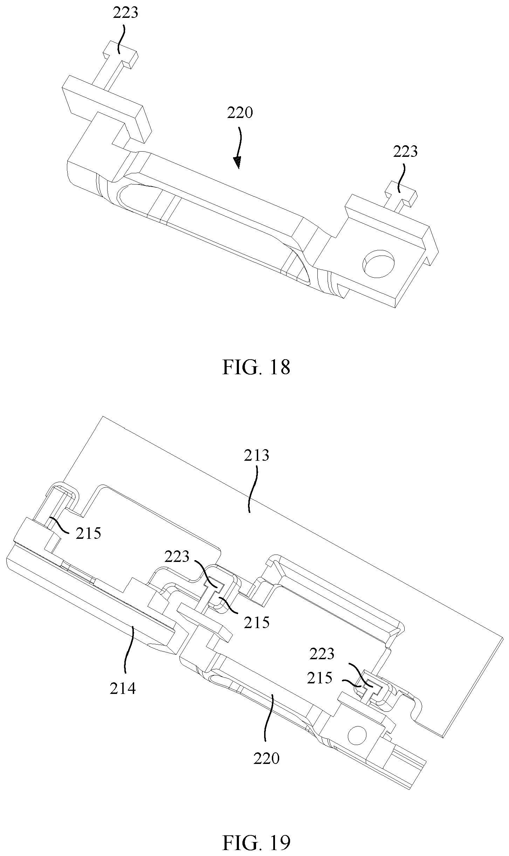

FIG. 17 and FIG. 18 respectively show a middle frame body and a supporting piece that are produced by using the foregoing production method. As shown in FIG. 17 and FIG. 18, in some embodiments, the producing a middle frame body and a supporting piece includes the following steps.

S201: Produce a middle frame body with at least one first material-connecting piece.

In this application, a produced middle frame body 210 has at least one first material-connecting piece 215. The at least one first material-connecting piece 215 is configured to provide a connection position for a supporting piece 220.

The middle frame body 210 may include a middle plate 213 and a border frame 214. For example, in this application, FIG. 17 shows three first material-connecting pieces 215, with two first material-connecting pieces 215 configured to provide connection positions for a supporting piece 220, and the other first material-connecting piece 215 configured to connect the middle plate 213 and the border frame 214.

S202: Produce a supporting piece with at least one second material-connecting piece, where at least some of the first material-connecting pieces are configured to correspondingly connect to the second material-connecting pieces.

In this application, a produced supporting piece 220 has at least one second material-connecting piece 223. The second material-connecting pieces 223 are configured to fit with some of the first material-connecting pieces 215, to connect the supporting piece 220 and the middle frame body 210.

FIG. 19 shows a first state of connection between a supporting piece and a middle frame body. As shown in FIG. 9 and FIG. 19, for a purpose of securely connecting a supporting piece 220 and a middle frame body 210, in some embodiments, before the middle frame body and the supporting piece are connected, the following step is included:

connecting a first material-connecting piece and a second material-connecting piece.

In this application, when the supporting piece 220 and the middle frame body 210 are connected and fastened by the first mounting portion 212 and the second mounting portion 221, the supporting piece 220 and the middle frame body 210 are further connected by the first material-connecting piece 215 and the second material-connecting piece 223. In this way, different parts of the supporting piece 220 can each be connected to the middle frame body 210, avoiding a concentration of parts at which the supporting piece 220 and the middle frame body 210 are connected, improving stability of connection between the supporting piece 220 and the middle frame body 210, and preventing the supporting piece 220 and the middle frame body 210 from deforming.

During specific implementation, the first material-connecting piece 215 and the second material-connecting piece 223 may be connected through snap-fitting, sticking, soldering, riveting, or screwing.

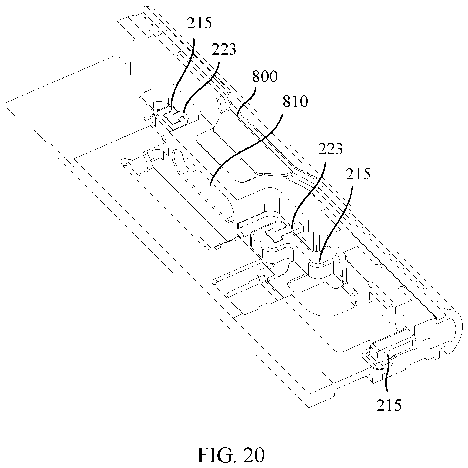

FIG. 20 shows a second state of connection between a supporting piece and a middle frame body. Based on the embodiment in FIG. 19, as shown in FIG. 20, in the middle frame assembly production method provided in the embodiment of this application, the connecting the middle frame body and the supporting piece includes:
coating the supporting piece and at least part of the middle frame body through injection molding.

In this application, when the supporting piece 220 and the middle frame body 210 are securely connected by the first material-connecting piece 215 and the second material-connecting piece 223 and by the first mounting portion 212 and the second mounting portion 221, the supporting piece 220 and part of the middle frame body 210 are coated with plastic through an injection molding process, forming a second connecting piece 800. In this way, the supporting piece 220 and part of the middle frame body 210 are fastened by the second connecting piece 800, implementing seamless connection between the supporting piece 220 and the middle frame body 210.

In some embodiments, after the middle frame body and the supporting piece are connected, the following step is included:
cutting off the first material-connecting piece and the second material-connecting piece.

Specifically, the first material-connecting piece 215 and the second material-connecting piece 223 may be cut off through machining, to form the middle frame assembly shown in FIG. 12. When the supporting piece 220 and part of the middle frame body 210 are coated with plastic through the injection molding process, positions of the first material-connecting piece 215 and the second material-connecting piece 223 may be exposed. In other words, the positions of the first material-connecting piece 215 and the second material-connecting piece 223 are not coated with plastic. In this way, it is convenient to cut off the first material-connecting piece 215 and the second material-connecting piece 223.

It should be noted that after the supporting piece 220 and part of the middle frame body 210 are coated with plastic to form the second connecting piece 800, the second connecting piece 800 can securely connect the supporting piece 220 and the middle frame body 210. In addition, cutting off the first material-connecting piece 215 and the second material-connecting piece 223 after the second connecting piece 800 is formed helps reduce a weight of an electronic device.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent substitution, improvement, and the like made based on the technical solutions in this application shall fall within the protection scope of this application.

## Claims

1. A middle frame assembly, used in an electronic device, wherein the middle frame assembly comprises a middle frame body and a supporting piece, the middle frame body has a mounting notch, the supporting piece is disposed in the mounting notch, the supporting piece is connected to the middle frame body, and the supporting piece has a first jack that is configured for an insertion piece to pass through.

2. The middle frame assembly according to claim 1, wherein the middle frame body has at least one first mounting portion, the supporting piece has at least one second mounting portion, and the first mounting portions are connected to the second mounting portions on a one-to-one basis.

3. The middle frame assembly according to claim 2, wherein the supporting piece has a first end and a second end, the first end and the second end are disposed opposite each other in a direction in which the supporting piece extends, and the direction in which the supporting piece extends is perpendicular to a direction in which the insertion piece is inserted in the first jack; and
the second mounting portion is located at the first end, and an end face that is of the first mounting portion and that faces the supporting piece forms a first inner side wall of the mounting notch.

4. The middle frame assembly according to claim 3, wherein the mounting notch has a second inner side wall, the first inner side wall is opposite the second inner side wall, and there is a gap between the second end and the second inner side wall.

5. The middle frame assembly according to any one of claims 2 to 4, wherein the first mounting portion and the second mounting portion are soldered or stuck together.

6. The middle frame assembly according to any one of claims 2 to 4, wherein a first connecting piece is further comprised, the first mounting portion has a first connection position, the second mounting portion has a second connection position, and the first connection position and the second connection position are connected by the first connecting piece.

7. The middle frame assembly according to claim 6, wherein the first connecting piece is a rivet, and the first connection position and the second connection position are first connecting holes; or
the first connecting piece is a screw, one of the first connection position and the second connection position is a second connecting hole, and the other is a threaded hole matching the screw.

8. The middle frame assembly according to any one of claims 2 to 4, wherein at least one of the first mounting portion and the second mounting portion has a positioning piece, and the positioning piece is configured to limit relative mounting positions of the first mounting portion and the second mounting portion.

9. The middle frame assembly according to claim 8, wherein the positioning piece is a positioning step, the positioning step is located on one of the first mounting portion and the second mounting portion, and the positioning step has a step bottom face and a step side face; and
a surface of the other of the first mounting portion and the second mounting portion presses against the step bottom face, and an end face that is of the other of the first mounting portion and the second mounting portion and that is opposite the step side face presses against the step side face.

10. The middle frame assembly according to claim 9, wherein the step bottom face is parallel to the direction in which the insertion piece is inserted in the first jack.

11. The middle frame assembly according to any one of claims 2 to 4, wherein the supporting piece has a first material-pressing portion and a second material-pressing portion, and the first material-pressing portion and the second material-pressing portion are located on a side face that is of the supporting piece and that faces the interior of the mounting notch; and
the first material-pressing portion and the second material-pressing portion are located on two sides of the first jack, respectively.

12. The middle frame assembly according to claim 11, wherein the first material-pressing portion is located on the second mounting portion, and the first material-pressing portion presses against a side face of one of the first mounting portion and the second mounting portion.

13. The middle frame assembly according to any one of claims 2 to 12, wherein the middle frame body comprises a middle plate and a border frame, the middle plate is connected to the border frame, and the mounting notch is provided in the border frame.

14. The middle frame assembly according to any one of claims 1 to 12, wherein the supporting piece is a metal injection molding part.

15. The middle frame assembly according to any one of claims 1 to 12, wherein a second connecting piece is further comprised, the supporting piece and the middle frame body are connected by the second connecting piece, and the second connecting piece coats the supporting piece and part of the middle frame body.

16. The middle frame assembly according to claim 15, wherein the second connecting piece is a plastic injection molding part.

17. The middle frame assembly according to claim 15, wherein part of the second connecting piece coats an inner side wall of the first jack to form a second jack.

18. An electronic device, comprising a display and the middle frame assembly according to any one of claims 1 to 17, wherein the display is located on a side of the middle frame assembly.
